Europäisches Patentamt

European Patent Office

Office européen des brevets

(11) Publication number: **0 266 098 B1**

# EUROPEAN PATENT SPECIFICATION

(45) Date of publication of patent specification: **27.11.91**

(21) Application number: **87309116.9**

(22) Date of filing: **15.10.87**

(51) Int. Cl.⁵: **F02B 33/44**, F16L 27/10, F16L 27/08

(54) **Supercharger system noise reduction.**

(30) Priority: **27.10.86 US 923587**

(43) Date of publication of application:
**04.05.88 Bulletin 88/18**

(45) Publication of the grant of the patent:
**27.11.91 Bulletin 91/48**

(84) Designated Contracting States:
**DE FR GB IT**

(56) References cited:
**DE-A- 3 217 633**
**DE-A- 3 220 811**
**DE-A- 3 247 274**
**GB-A- 1 336 841**

(73) Proprietor: **EATON CORPORATION**
**Eaton Center, 1111 Superior Avenue**
**Cleveland Ohio 44114(US)**

(72) Inventor: **Pociask, Frederick**
**1990 Teggerdine**
**Milford Michigan 48042(US)**
Inventor: **Woodard, Steven Wayne**
**14266 Loveland**
**Livonia Michigan 48154(US)**

(74) Representative: **Wagner, Karl H.**
**WAGNER & GEYER Patentanwälte Gewürz-**
**mühlstrasse 5 Postfach 246**
**W-8000 München 22(DE)**

## Description

### FIELD OF THE INVENTION

The present invention relates to reducing noise generated by a supercharger for an internal combustion engine disposed in a vehicle. More specifically, the invention relates to reducing noise radiated by supercharger system ducting and to isolating the ducting system to prevent transmission of noise producing vibrations to vehicle chassis and body.

DE-A-3 247 274 shows a vehicle as described in the pre-amble of claim 1

### BACKGROUND OF THE INVENTION

Positive displacement blowers of the backflow type, such as Roots-type blowers have long been characterized by noisy operation and, therefore, have had little successful use in many applications such as engine superchargers for passenger cars and light trucks. Noise caused by such blowers may be roughly classified into two groups: solid borne noise caused by rotation of timing gears and rotor shaft bearings subjected to fluctuating loads, and fluid borne noise caused by fluid flow characteristics such as backflow or dynamic pressure pulses.

As is well known, backflow blowers are not internal compression devices, i.e., such blowers do not mechanically compress fluid while transferring the fluid from blower inlet to outlet. For example, spaces between adjacent unmeshed rotor lobes of a Roots-type blower transfers trapped volumes of relatively low pressure inlet port air to relatively high pressure air at the outlet port. Hence, the high pressure air rushes or backflows into the spaces or transfer volumes as the leading lobe of each trapped volume traverses the outlet port boundry, thereby producing dynamic pressure pulses having amplitude proportional to pressure ratio and frequency or rotor passing frequency equal to the number of rotor lobes traversing the outlet port boundries per unit time. For a two rotor Roots-type blower with three lobes per rotor, this frequency and its harmonics may be in the range of 200 to 3,000 Hz. When such a blower is operated at a pressure ratio of about 1.5, the amplitude of the outlet port pressure pulses may be in the range of two psi rms. In an analogous manner, the inlet port may also generate dynamic pressure pulses of the same frequency but with a lower amplitude in the range of 0.5 psi rms.

Pressure pulses of these frequencies and amplitudes excite supercharger system components which then act as speakers. Further, system vibrations produced by the pressure pulses are readily transmitted to vehicle chassis/body components which then also act as speakers producing objectionable noise in the vehicle passenger compartment. The problem of noise produced by the pressure pulses is particularly acute when the system includes a intercooler mounted on the chassis/body to enhance heat exchange. In such a system the supercharger may be rigidly mounted on the engine. The engine is supported on the vehicle chassis/body in known manners by shock mounts which isolate engine vibrations and allow movement of the engine relative to the chassis/body. The intercooler is soft mounted on the vehicle chassis/body to prevent or reduce vibration links between the intercooler and vehicle chassis/body. And supercharger system ducting interconnecting the engine mounted supercharger with the chassis/body mounted intercooler and the engine intake manifold with the intercooler must allow relative movement therebetween which does not adversely affect the soft mounting of the intercooler and yet be rigid enough to prevent speaker like vibration of the ducting walls.

### SUMMARY OF THE INVENTION

An object of this invention is to reduce noise generated by a supercharger system.

Another object of this invention is to reduce noise generated by pressure pulses from a supercharger of the backflow type.

Another object of this invention is to reduce noise generated by a backflow type supercharger disposed in a system having a vehicle chassis/body mounted intercooler.

This is acheived by the features of claim 1.

### BRIEF DESCRIPTION OF THE DRAWINGS

A vehicle having a ducting system according to the invention is shown in the accompanying drawings in which:

Figure 1 is a downwardly looking schematic of the invention disposed in a partial outline of a vehicle;

Figure 2 is a side elevational schematic of the invention with the same type partial outline of the vehicle;

Figure 3 is a front elevational schematic of the invention partially in section looking in the direction of arrow 3 in Figure 1 and 2;

Figures 4 and 5 are respectively a sectional view and a relief view of a duct coupling in Figures 1-3; and

Figures 6 and 7 are sectional views of alternative couplings.

### DETAILED DESCRIPTION OF THE DRAWINGS

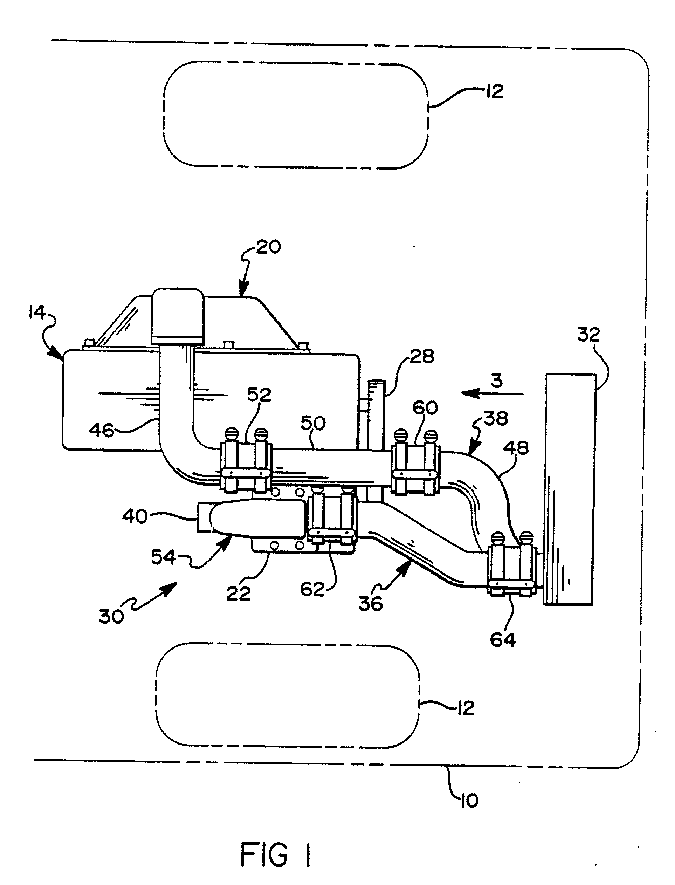

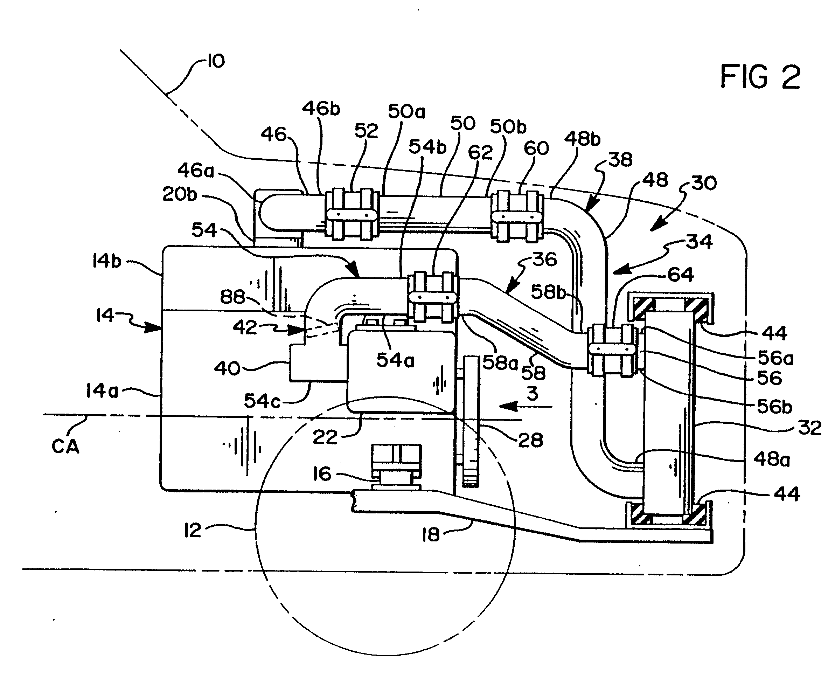

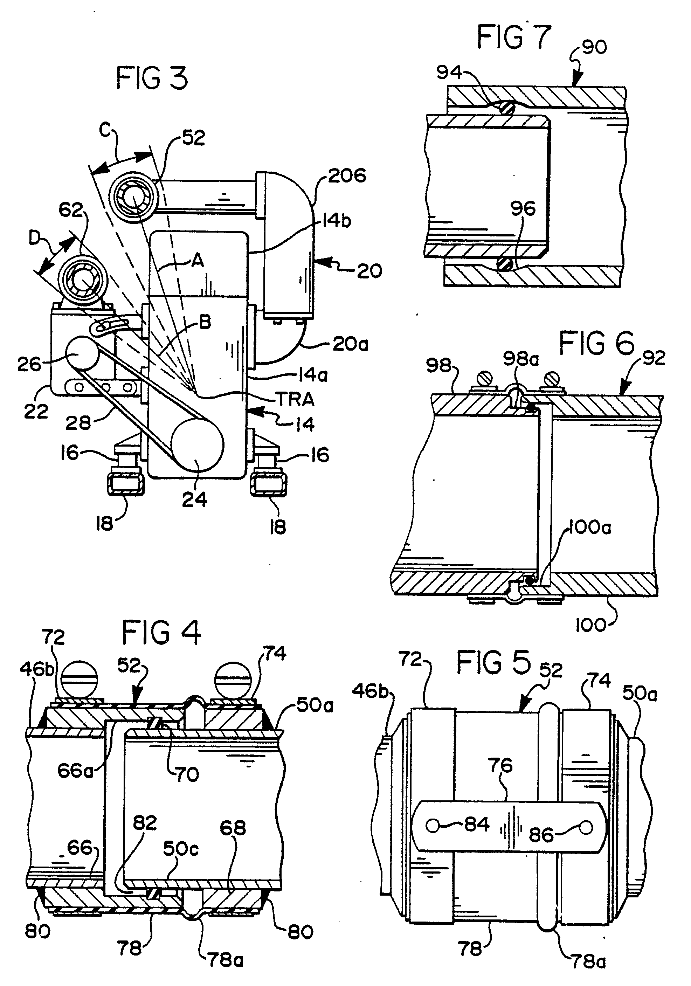

The plan and side views of Figures 1 and 2 illustrate a front portion of a vehicle with the vehicle body 10 and front wheels 12 represented by phantom lines. Within body 10 is an internal combustion engine 14 supported by engine mounts 16 carried on partially shown portions of a vehicle frame or chassis 18. The chassis portions are shown only in Figures 1 and 3. Since many vehicles are currently made with so-called unitized bodies having integrated chassis and body, the term chassis/body herein is defined as being generic to vehicles with separate chassis and body, and with integrated chassis and body. Two front engine mounts are shown. The rear or left of the engine, as viewed in Figure 2, is also supported by a mount(s) which is often at the rear of an unshown transmission rigidly secured to the rear or left end of the engine. Engine 14 is shown as being disposed with its power shaft or crankshaft axis CA generally disposed along the longitudinal axis of the vehicle. However, the engine may be mounted with axis CA transverse to the longitudinal axis. Further, engine 14 may be of any internal combustion type.

As may be seen in Figures 1-3, engine 14 includes a block or housing 14a, a valve cover 14b, an intake manifold assembly 20, a supercharger 22, and a crankshaft driven pully 24. The intake manifold assembly includes a manifold member 20a fixed to the right side of the engine, as viewed in Figure 3, and a vertically extending member 20b fixed to the top of the manifold. Manifold member 20a directs air or air fuel mixture to the engine combustion chambers in a well known manner. Vertical member 20b may be merely a duct extension of the manifold or a fuel control device. Supercharger 22 may be a positive displacement blower or a turbocharger, and may or may not be fixed directly to the engine. Preferably the supercharger is a positive displacement blower. Herein, the supercharger is a Roots-type blower which, of course, is a backflow-type blower known for producing pressure pulses. Such pressure pulses are known to generate objectional noise by resonance of flexible duct and body structures. The supercharger is fixed to the engine by brackets similar to generator mounting brackets. The unshown internal pumping mechanism of the supercharger is rotated by a pulley 26 driven by pulley 24 via a drive belt 28.

Supercharger 22 forms part of a supercharging system 30 for increasing engine power by increasing the pressure of air to the engine combustion chambers. The supercharger system includes the supercharger 22, an air to air intercooler 32, ducting system 34 having first and second duct means 36, 38 for respectively routing supercharger outlet air to the intercooler and them routing the air to the intake manifold assembly, a supercharger air intake opening 40, and a bypass assembly 42 for regulating the air pressure to the engine.

Intercooler 32 is soft mounted on the chassis/body of the vehicle by vibration isolation mounts 44 to prevent or reduce vibration links between the intercooler and chassis/body. Herein, the isolator parts of the mounts are rubber loaded in compression. Other materials may be used. Alternatively, the mounts may be loaded in shear in known manner. The intercooler for the disclosed supercharging system requires mounting soft enough to allow motion isolation of all six rigid body modes of the intercooler at less than 50 Hz to assure that all structural vibration generated in the intercooler at supercharging operating speeds is attenuated by 20 decibels from the surrounding structure, i.e., the chassis/body. Ther soft mounting is adversly affected should movement of duct means 36, 38 apply forces which move the intercooler in the mounts 44. Forces as low as ten pounds (4.54 Km) have caused vibration links between the intercooler and chassis/body.

Duct system 30 allows relatively free movement of the engine about the engine's torque roll axis (TRA). The axis may translate somewhat from the point TRA in Figure 3 during engine roll; hence, the position of the axis is only generally defined by the point TRA in Figure 3. Further, the axis often slopes downward toward the rear of the vehicle rather than being parallel with the longitudinal axis of the vehicle as indicated in Figure 2.

Second duct means 38 includes first and second rigid duct members 46, 48 respectively fixed at one end 46a, 48a to relatively moveable components (i.e., engine 14 and intercooler 32) and a third rigid duct member 50 interposed between the other ends 46b, 48b of the first and second duct members. The other ends 46b, 48b and the opposite ends 50a, 50b of the third rigid duct member telescopically review each other (Figures 4, 5) to define part of a coupling 52 which allows angular movement or articulation of the rigid duct members in response to movement of the engine. In a like manner, first duct means 36 includes fourth and fifth rigid duct members 54, 56 respectively fixed at one end 54a, 56a to supercharger 22 and intercooler 32 and a sixth rigid duct member 58 interposed between the other ends 54b, 56b of the fourth and fifth duct members. The other ends 54b, 56b and the opposite ends 58a, 58b of the six duct member telescopically receives each other in the same manner set forth above. Each of the telescoping duct wall portions form part of couplings 60, 62, 64 which are the same as coupling 52. Hence, a description of coupling 52 will suffice for all.

Coupling 52, as seen in Figures 4, 5, includes collars 66, 68, an extended portion 50c of duct end 50a, a ring seal 70, clamps 72, 74, two links 76 disposed on diametrically opposite sides of the coupling, and a duct cover 78. Only one link 76 is shown in the drawings and in some applications only one link is needed. Collars 66, 68 may be sealingly fixed to the duct ends in any wall known manner; herein, welds 80 are used. An enlarged portion 66a of the inner wall of collar 68 telescopically extends over wall portion 50c of duct 50 with an annular, radially extending space 82 therebetween to allow angular movement or articulation of the rigid wall duct members. Space 82 is sealed against leakage of supercharged air in the ducts by ring seal 70 retained in an annular groove in collar 66. Duct wall portion may also be provided with an annular groove. Seal 70, disclosed herein, is made of an elastomeric material of relatively low durometer. The seal must be elastic enough to allow relatively force free angular movement or articulation of the rigid duct members while still maintaining acceptable sealing of space 82. Seal 70 is also, preferably elastic enough to function as a vibration isolator. Dust cover 78, which may be held in place by clamps 72, 74, prevents entrance of foreign matter which could deteriorate seal 70. The cover should be elastic enough so as not to hinder force free articulation of the rigid ducts. Herein the cover is a rubber sleeve with a convolute 78a to enhance flexibility.

Links 76 connects clamps 72, 74 by pivot pins 84, 86. The links are preferably made of a thin metal to reduce vibration transmission. Vibration transmitted by the links is greatly reduced by dust cover 78. When the clamps are tightly secured over collars 66, 68, links 76 prevent axial movement of the duct members and function as hinges which pivot about pins 84, 86 to limit angular movement or articulation of the rigid ducts in a predetermined direction transverse to the longitudinal areas of the telescoping duct wall portions 50c, 66a.

Figure 3 illustrates a method of readily determining the pivotal axes of the pins 84, 86 by positioning the pin axes along diameters of the telescoping duct walls. The diameters should lie along a ray extending from the engine torque roll axis TRA. Arrows A, B represent the rays for couplings 52, 62 and, accordingly, the transverse hinge axes. Further, forces tending to axially move the ducts may be minimized by positioning the seal 70 midway between pivot pins 84, 86 and by positioning the longitudinal axis of the telescoping duct portions substantially parallel to axis TRA. Alternatively, the longitudinal axis of the telescoping duct portions may be positioned substantially parallel or in axial alignment with the ray extending from axis TRA. This alternative arrangement is particularly advantageous in a vehicle with transverse engine and with intercooler 32 positioned in the front of the vehicle, as shown herein. Arrows C, D in Figure 3 represent measured movement of rigid ducts 46, 54 at couplings 52, 62 relative to the chassis/body and intercooler when engine 14 is torqued with the unshown transmission shifted between forward and reverse drive. Arrow C represents a total movement of three inches (7.62 cm). As may be seen, total movement at the coupling increases with increasing distance from axis TRA.

The rigid duct members are preferably formed of steel or aluminum. Excellent results have been obtained with one eight (0.32 cm) thick walls of extruded aluminum. Walls of cast aluminum are believed ideal due to the inherent damping characteristics of cast material.

Rigid duct member 54 defines a unitary duct for supercharger outlet and inlet air, and bypass air. Outlet air is discharged at the top of the supercharger into duct portion 54a, inlet and bypass air is directed to the supercharger inlet at the leftwardly facing end of the supercharger in Figures 1, 2 by duct portion 54c. Bypass air is controlled by a butterfly valve 88 in bypass assembly 42. Bypass assemblies of this type are well known in the art and the valves therein are opened and closed as a function of engine power demand in known manners.

Figures 6 and 7 represent alternative coupling embodiments 90, 92 of coupling 52. Figure 6 illustrates only the telescoping and seal portion of the coupling. Therein, a ring seal, 94 analogous to seal 70, is disposed in an enlarged, radioed groove to enhance force free articulation. In practice, coupling 90 is provided with means to prevent axial movement and define the transverse axis of articulation in a manner analogous to coupling 52. Figure 7 illustrates a simplified version of coupling 52 wherein telescoping of the wall portions is provided by reducing the outer wall diameter 98a of one duct 98 and increasing the inner wall diameter 100a of the other duct 100.

**Claims**

1. A vehicle including:
   a chassis/body (18/10);
   an internal combustion engine (14) having an air intake manifold (20) fixed thereto;
   engine mounts (16) supporting the engine (14) on the chassis/body (18/10) and allowing movement of the engine (14) relative the chassis/body (18/10) within first limits; and an air intercooler (32) for cooling supercharger outlet air; characterised by
   a positive displacement supercharger (22) having an air inlet and an air outlet (54c,54a);
   vibration isolator mounts (44) supporting the intercooler (32) on the chassis/body (18/10) and allowing movement of the intercooler (32) relative to the chassis/body (18/10) within second limits less than the first limits;

a ducting system (30) including first and second duct means (36,38) for respectively routing the supercharger outlet air to the intercooler (32) and then routing the air to the intake manifold (20), the second duct means (38) including first and second rigid duct members (46,48) respectively fixed at one end (46a,48a) to the manifold (20) and intercooler (32) and a third rigid duct member (50) interposed between the other ends (46b,48b) of the first and second duct members (46,48), the other ends (46b,48b) and the opposite ends (50a,50b) of the third duct member (50) telescopically receiving each other with the telescoping portions (66a,50c) of the duct walls being radially spaced (82) apart to allow relative angular movement therebetween in response to movement of the engine (14);

a flexible seal (70) disposed in each radial space (82) between the duct walls; and

retaining means (52) substantially preventing relative axial movement of the telescoping duct portions (66a,50c) and allowing said relative angular movement of the telescoping duct portions (66a,50c), whereby movement of the intercooler (32) in its vibration isolator mounts (44) due to engine movement is minimized.

2. The vehicle of Claim 1, where said retaining means (52) includes hinge means (72,74,76,84,86) allowing said relative angular movement about axes (84,86) disposed in a predetermined transverse direction relative to the longitudinal axes of the telescoping duct portions (66a,50c).

3. The vehicle of Claim 2, wherein said retaining means (52) includes a link (76) extending generally in the longitudinal direction of the telescoping duct portions (66a,50c) and pivotally secured at longitudinally apart positions (84,88) to each of the ducts (46,48) for preventing said relative axial movement and for allowing said angular movement in said predetermined transverse direction.

4. The vehicle of Claim 3, wherein said retaining means (52) includes a second link (76) secured in the same manner and disposed diametrically across from the first mentioned link (76).

5. The vehicle of any of Claims 1-4, wherein said seal (70) is an elastomeric ring seal having a relatively low durometer providing vibration isolation between the telescoping duct members (46,48,50).

6. The vehicle of any of Claims 1-5, further including a dust cover (78) disposed over the outer exposed end of the telescoping duct portions (66a,50c) and positioned not to interfere with said angular movement.

7. The vehicle of any of Claims 1-6, wherein said retaining means (52) includes first and second clamps (72,74) axially spaced apart with respect to the longitudinal axes of the telescoping ducts (46,48) and respectively secured to the outer surface of telescoping duct portions, and a generally longitudinally disposed link (76) pivotally secured (84,86) at its ends to said clamps (72,74) for preventing said relative axial movement and for allowing said angular movement about axes disposed in a predetermined transverse direction relative to the longitudinal axes of the telescoping duct portions.

8. The vehicle of Claim 7, wherein said retaining means (52) includes a second link (76) secured in the same manner to said clamps (72,74) and disposed diametrically across from the first mentioned link (76).

9. The vehicle of Claim 7 or 8, wherein said seal (70) is an elastomeric ring seal having a relatively low durometer providing vibration isolation between the telescoping duct members (46,48) and said link (76) being positioned to minimize vibration transmission between said telescoping duct members.

10. The vehicle of any of Claims 1-9, wherein said supercharger (22) is fixed to said engine (14);

said first duct means (36) of said ducting system (30) includes fourth, fifth, and sixth duct members (54,56,58) respectively the same as said first, second, and third duct members (46,48,50); and

the telescoping duct portions (66a,50c) of said fourth, fifth and sixth duct members (54,56,58) cooperating with seals and retainers substantially the same as said flexible seals (70) and retaining means (52).

11. The vehicle of Claim 10, wherein said supercharger (22) is of the backflow type.

12. The vehicle of Claim 10, wherein said supercharger (22) is of the Roots type.

13. The vehicle of any of Claims 1-12, wherein said engine mounts (16) generally define a torque roll axis (TRA) for the engine with the magnitude of the engine roll being within said first limits and proportional to the magnitude of engine torque;

said other end (46b) of the first rigid duct (46) being radially spaced (A) from the torque roll axis (TRA); and

the longitudinal axes of said telescoping duct portions (66a,50c) being positioned substantially parallel to the torque roll axis to minimize axial movement of the telescoping duct portions (66a,50c) in response to engine roll.

14. The vehicle of any of Claims 1-13, wherein said engine mounts (16) generally define a torque roll axis (TRA) for the engine with the magnitude of engine roll being within said first limits and proportional to the magnitude of engine torque;

said other end (46b) of the first rigid duct (46) being radially spaced (A) from the torque roll axis; and

the longitudinal axes of said telescoping duct portions (66a,50c) being positioned substantially parallel to radii (A) extending from the torque roll axis (TRA) to minimize axial movement of the telescoping duct portions (66a,50c) in response to engine roll.

**Revendications**

1. Véhicule comprenant : un châssis/carrosserie (18/10) ;

un moteur à combustion interne (14) ayant un collecteur d'admission (20) fixé sur lui ;

des supports de moteur (16) portant le moteur (14) sur le châssis/carrosserie (18/10) et permettant le mouvement du moteur (14) par rapport au châssis/carrosserie (18/10) dans certaines limites ; et

un radiateur intermédiaire (32) pour refroidir l'air de sortie comprimé ; caractérisé par un compresseur (22) à déplacement positif, comportant une entrée d'air et une sortie d'air (54c,54a) ;

des supports isolants de vibration (44) supportant le radiateur intermédiaire (32) sur le châssis/ carrosserie (18/10) et permettant le mouvement du radiateur intermédiaire (32) par rapport au châssis/carrosserie (18/10) dans des limites inférieures aux premières limites;

un système de tubulures (30) comprenant des premiers et seconds moyens de tubulures (36, 38) pour guider respectivement l'air comprimé à la sortie vers le radiateur intermédiaire (32) et guider ensuite l'air dans le collecteur d'admission (20), le second moyen de tubulure (38) comprenant un premier et un second organe de tubulure rigide (46, 48) respectivement fixés à une extrémité (46a, 48a) au collecteur (20) et au radiateur intermédiaire (32) et un troisième organe (50) rigide de tubulure intercalé entre les autres extrémités (46b, 48b) des premier et second organe (46, 48) de tubulure, les autres extrémités (46b, 48b) et les extrémités opposées (50a, 50b) du troisième organe de tubulure (50) recevant l'autre par emboîtement, les parties (66a, 50c) à emboîter des parois de tubulure étant radialement espacées (82) pour permettre un mouvement angulaire relatif entre elles en réponse au déplacement du moteur (14) ;

un joint souple (70) disposé dans chaque espace radial (82) entre les parois de tubulure ; et

des moyens de fixation (52) pour empêcher sensiblement le déplacement axial relatif des portions de tubulures emboîtées (66a, 50c) et permettant ledit mouvement angulaire des portions de tubulures emboîtées (66a, 50c), le déplacement du radiateur (32) intermédiaire étant limité au minimum dans ses supports isolants de vibration (44) par suite du déplacement du moteur.

2. Véhicule selon la revendication 1, dans lequel lesdits moyens de fixation (52) comprennent des moyens de pivotement (72, 74, 76, 84, 86) permettant ledit mouvement angulaire relatif autour d'axes (84, 86) placés dans un sens transversal prédéterminé par rapport aux axes longitudinaux des parties de tubulures emboîtées (66a, 50c).

3. Véhicule selon la revendication 2, dans lequel les moyens de fixation (52) comprennent un maillon (76) s'étendant généralement dans le sens longitudinal des parties de tubulures emboîtées (66a, 50c) et fixées en pivotement à des positions écartées (84, 88) longitudinalement à chacune des tubulures (46, 48) pour empêcher ledit déplacement axial relatif et pour permettre ledit déplacement angulaire dans le sens transversal prédéterminé.

4. Véhicule selon la revendication 3, dans lequel lesdits moyens de fixation (52) comprennent un second maillon (76) fixé de la même manière et placé de façon diamétralement opposée par rapport au premier maillon mentionné (76).

5. Véhicule selon l'une quelconque des revendications 1 à 4, dans lequel ledit joint (70) est un joint annulaire élastomère ayant une dureté relativement faible fournissant un isolement de vibration entre les organes de tubulures s'emboîtant (46, 48, 50).

6. Véhicule selon l'une quelconque des revendications 1 à 5, comprenant un couvercle antipoussière (78) placé au-dessus de l'extrémité externe des parties de tubulures s'emboîtant (66a, 50c) et placé de façon à ne pas interférer dans ledit déplacement angulaire.

7. Véhicule selon l'une quelconque des revendications 1 à 6, dans lequel lesdits moyens de fixation (52) comprennent un premier et un second colliers (72, 74) espacés axialement par rapport aux axes longitudinaux des tubulures s'emboîtant (46, 48) et fixés respectivement à la surface externe des parties de tubulures s'emboîtant, et un maillon (76) disposé généralement longitudinalement fixé en pivotement (84, 86) à ses extrémités aux dits colliers (72, 74) pour empêcher ledit mouvement axial relatif et pour permettre ledit mouvement angulaire autour des axes placés dans une direction transversale prédéterminée par rapport aux axes longitudinaux des parties de tubulures s'emboîtant.

8. Véhicule selon la revendication 7, dans lequel lesdits moyens de fixation (52) comprennent un second maillon (76) fixé de la même manière aux dits colliers (72, 74) et placé de façon diamétralement opposée au premier maillon mentionné (76).

9. Véhicule selon la revendication 7 ou 8, dans lequel ledit joint (70) est un joint annulaire en élastomère ayant une dureté relativement faible fournissant un isolement à la vibration entre les éléments de tubulures s'emboîtant (46, 48) et ledit maillon (76) étant placé de façon à minimiser la transmission de vibrations entre lesdits membres de tubulures s'emboîtant.

10. Véhicule selon l'une quelconque des revendications 1 à 9, dans lequel on fixe ledit compresseur (22) sur ledit moteur (14) ;
ledit premier moyen (36) dudit système de tubulure (30) comprend les quatrième, cinquième et sixième organes de tubulure (54, 56, 58), respectivement les mêmes que lesdits premier, second et troisième organes de tubulures (46, 48, 50) ; et
les parties de tubulures s'emboîtant (66a, 50c) desdits quatrième, cinquième et sixième organes de tubulure (54, 56, 58) coopérant avec des joints et des logements sensiblement les mêmes que lesdits joints flexibles (70) et moyens de logement (52).

11. Véhicule selon la revendication 10, dans lequel ledit compresseur (22) est du type à retour de courant.

12. Véhicule selon la revendication 10, dans lequel ledit compresseur (22) est du type Roots.

13. Véhicule selon l'une quelconque des revendications 1 à 12, dans lequel lesdits supports de moteur (16) définissent généralement un axe de roulage de couple (TRA) pour le moteur, avec l'amplitude de roulement du moteur qui se trouve dans lesdites premières limites et qui est proportionnelle à la grandeur du couple moteur ;
ladite autre extrémité (46b) de la première tubulure rigide (46) étant radialement espacée (A) de l'axe de roulage de couple (TRA) ; et
l'axe longitudinal desdites parties de tubulures (66a, 50c) s'emboîtant étant placé sensiblement parallèlement à l'axe de roulage de couple pour minimiser le mouvement axial des parties de tubulure s'emboîtant (66a, 50c) en réponse au roulement du moteur.

14. Véhicule selon l'une quelconque des revendications 1 à 13, dans lequel lesdits supports de moteur (16) définissent généralement un axe de roulage de couple (TRA) du moteur avec l'amplitude du roulement de moteur qui se trouve dans lesdites premières limites et est proportionnelle à l'importance du couple moteur ;
ladite autre extrémité (46b) de la première tubulure rigide (46) étant radialement distante (A) de l'axe de roulage de couple ; et
les axes longitudinaux desdites portions de tubulure s'emboîtant (66a, 50c) étant placées sensiblement parallèlement aux rayons (A) s'étendant depuis l'axe de roulage de couple (TRA) pour minimiser le déplacement axial des parties de tubulures s'emboîtant (66a, 50c) en réponse au roulement du moteur.

**Patentansprüche**

1. Ein Fahrzeug, welches folgendes aufweist:
ein Chassis/Körper (18/10);
einen Verbrennungsmotor (14) mit einer daran befestigten Lufteinlaßsammelleitung (20);
Motorbefestigungen (16) zum Tragen des Motors (14) am Chassis/ Körper (18/10) und zur Gestattung von Bewegung des Motors (14) relativ zum Chassis/Körper (18/10) innerhalb erster Grenzen; und
ein Zwischenkühler (32) zum Kühlen der Superlader-Auslaßluft gekennzeichnet durch einen eine positive Verdrängung besitzenden Superlader (Kompressor) (22) mit einem Lufteinlaß und einem Luftauslaß (54c, 54a); Schwingungsisolierbefestigungen (44), die den Zwischenkühler (32) am Chassis/Körper (18/10) tragen und die Bewegung des Zwischenkühlers (32) relativ zum Chassis/Körper (18/10) innerhalb zweiter Grenzen gestatten, die kleiner sind als die ersten Grenzen; ein Leitungssystem (30) mit ersten und zweiten Leitungsmitteln (36, 38) zum Leiten der Superladerauslaßluft zum Zwischenkühler (32) und sodann zum Leiten der Luft zur Einlaßsammelleitung (20), wobei die zweiten Leitungsmittel (38) erste und zweite starre Leitungsglieder (46, 48) aufweisen, die jeweils befestigt sind an einem entsprechenden Ende (46a, 48a) mit der Sammelleitung (20) und dem Zwischenkühler (32) und mit einem dritten starren Leitungsglied (50) angeordnet zwischen den anderen Enden (46b, 48b) der ersten und zweiten Leitungsglieder (46, 48), wobei die anderen Enden (46b, 48b) und die entgegengesetzt liegenden Enden (50a, 50b) des dritten Leitungsglieds (50) einander teleskopartig aufnehmen, wobei die Teleskopteile (66a, 50c) der Leitungswände mit Radialabstand (82) angeordnet sind um die relative Winkelbewegung dazwischen infolge der Bewegung des Motors (14) zugestatten; eine flexible Dichtung (70) angeordnet in jedem Radialraum (82) zwischen den Leitungswänden; und Haltemittel (52), die im wesentlichen die relative Axialbewegung der teleskopartigen Leitungsteile (66a, 50c) verhindern und die erwähnte relative Winkelbewegung der teleskopartigen Leitungsteile (66a, 50c) gestatten, wodurch die Bewegung des Zwischenkühlers (32) in seinen Vibrationsisolierbefestigungen (44) infolge der Motorbewegung minimiert wird.

2. Fahrzeug nach Anspruch 1, wobei die Haltemittel (52) Anlenkmittel (72, 74, 76, 84, 86) aufweisen, welche die relative Winkelbewegung um die Achsen (84, 86) gestatten und zwar angeordnet in einer vorbestimmten Querrichtung relativ zu den Längsachsen der teleskopartigen Leitungsteile (66a, 50c).

3. Fahrzeug nach Anspruch 2, wobei die Haltemittel (52) ein Gelenk (76) aufweisen, welches sich im Ganzen in der Längsrichtung der teleskopartigen Leitungsteile (66a, 50c) erstreckt und schwenkbar befestigt ist an in Längsrichtung mit Abstand angeordneten Positionen (84, 88) und zwar mit jedem der Leitungen (46, 48) um die relative Axialbewegung zu verhindern und um die Winkelbewegung in der vorbestimmten Querrichtung zu gestatten.

4. Fahrzeug nach Anspruch 3, wobei die Haltemittel (52) ein zweites Gelenk (76) aufweisen und zwar befestigt in der gleichen Weise und angeordnet diametral entgegengesetzt gegenüber dem erst erwähnten Gelenk (76).

5. Fahrzeug nach einem der Ansprüche 1 bis 4, wobei die Dichtung (70) ein Elastomer-Dichtring ist mit einem relativ niedrigen Durometerwert, wodurch eine Schwingungsisolation zwischen den teleskopartigen Leitungsgliedern (46, 48, 50) vorgesehen wird.

6. Fahrzeug nach einem der Ansprüche 1 bis 5 mit einer Staubabdeckung (78) angeordnet über dem äußeren freiliegenden Ende der teleskopartigen Leitungsteile (66a, 50c) und positioniert um die Winkelbewegung nicht zu stören.

7. Fahrzeug nach einem der Ansprüche 1 bis 6, wobei die Haltemittel (52) erste und zweite Klammern (72, 74) axial mit Abstand bezüglich der Längsachsen der Teleskopleitungen (46, 48) aufweisen und zwar in entsprechender Weise befestigt an der Außenoberfläche der teleskopartigen Leitungsteile, und ferner mit einem im Ganzen in Längsrichtung angeordneten Gelenk (76) schwenkbar befestigt (84, 86) mit seinen Enden an Klammern (72, 74) zur Verhinderung der erwähnten relativen Axialbewegung und zum Gestatten der Winkelbewegung um die Achsen angeordnet in einer vorbestimmten Querrichtung relativ zu den Längsachsen der teleskopartigen Leitungsteile.

8. Fahrzeug nach Anspruch 7, wobei die Haltemittel (52) ein zweites Gelenk (76) aufweisen und zwar befestigt in der gleichen Weise an den Klammern (72, 74) und angeordnet diametral gegenüber von dem zuerst erwähnten Gelenk (76).

9. Fahrzeug nach Anspruch 7 oder 8, wobei die Dichtung (70) ein Elastomer-Dichtring ist mit einem relativ niedrigen Durometerwert und zwar zum Vorsehen einer Schwingungsisolation zwischen den teleskopartigen Leitungsgliedern (46, 48) und dem Gelenk (76) positioniert zur Minimierung der Vibrationsübertragung zwischen den teleskopartigen Leitungsgliedern.

10. Fahrzeug nach einem der Ansprüche 1 bis 9, wobei der Superlader (22) an dem Motor (14) befestigt ist; wobei die ersten Leitungsmittel (36) des Leitungssystems (30) vierte, fünfte und sechste Leitungsglieder (54, 56, 58) aufweisen, die jeweils die gleichen sind wie die ersten, zweiten und dritten Leitungsglieder (46, 48, 50); und wobei die teleskopartigen Leitungsteile (66a, 50c) der vierten, fünften und sechsten Leitungsglieder (54, 56, 58) mit den Dichtungen und Haltern zusammenarbeiten und zwar im wesentlichen gleich den flexiblen Dichtungen (70) und Haltemitteln (52).

11. Fahrzeug nach Anspruch 10, wobei der Superlader (22) zur Rückströmungsbauart gehört.

12. Fahrzeug nach Anspruch 10, wobei der Superlader (22) zur Rootsbauart gehört.

13. Fahrzeug nach einem der Ansprüche 1 bis 12, wobei die Motorbefestigungen (16) eine Drehmomentrollachse (torque roll axis = TRA) für den Motor definieren, wobei die Motorrollgröße innerhalb der ersten Grenzen liegt und proportional zur Größe des Motordrehmoments ist; wobei das andere Ende (46b) der ersten starren Leitung (46) im wesentlichen mit Radialabstand (A) gegenüber der Drehmomentrollachse (TRA) angeordnet ist; und wobei die Längsachsen der teleskopartigen Leitungsteile (66a, 50c) im wesentlichen parallel zur Drehmomentrollachse angeordnet sind um die Axialbewegung der teleskopartigen Leitungsteile (66a, 50c) infolge der Motorrollbewegung zu minimieren.

14. Fahrzeug nach einem der Ansprüche 1 bis 13, wobei die Motorbefestigungen (16) allgemein eine Drehmomentrollachse (TRA) für den Motor definieren, wobei die Motorrollgröße innerhalb der ersten Grenzen liegt und proportional zur Motordrehmomentgröße ist; wobei das andere Ende (46b) der ersten starren Leitung (46) mit Radialabstand (A) gegenüber der Drehmomentrollachse angeordnet ist, und wobei schließlich die Längsachsen der teleskopartigen Leitungsteile (66a, 50c) im wesentlichen parallel positioniert sind zu den Radien (A), die sich von der Drehmomentrollachse (TRA) erstrecken um die Axialbewegung der teleskopartigen Leitungsteile (66a, 50c) infolge der Motorrollbewegung zu minimieren.

FIG I

FIG 2

EP 0 266 098 B1

FIG 3

FIG 7

FIG 6

FIG 4

FIG 5